Europäisches Patentamt

European Patent Office

Office européen des brevets

(11) Veröffentlichungsnummer: **0 312 148**
**A2**

## (12) EUROPÄISCHE PATENTANMELDUNG

(21) Anmeldenummer: **88202176.9**

(51) Int. Cl.⁴: **G02B 6/38**

(22) Anmeldetag: **03.10.88**

(30) Priorität: **16.10.87 DE 3735037**

(43) Veröffentlichungstag der Anmeldung:
**19.04.89 Patentblatt 89/16**

(84) Benannte Vertragsstaaten:
**CH DE FR GB IT LI**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **CH FR GB IT LI**

(72) Erfinder: **Brüggendieck, Siegfried**
**Peter Walterscheidtstrasse 19**
**D-5060 Bergisch Gladbach(DE)**
Erfinder: **Rothärmel, Klaus**
**Longerichter Strasse 107**
**D-5000 Köln 60(DE)**
Erfinder: **Vormann, Hans, Dr.**
**Kölner Strasse 160**
**D-5067 Kürten-Weiden(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Steckerstift für einen Lichtwellenleiter.**

(57) Die Erfindung bezieht sich auf einen Steckerstift für einen Lichtwellenleiter, mit einer den LWL zentral aufnehmenden Kernhülse und einer die Kernhülse umgebenden und mit ihr verklebten Metallhülse. Eine in einem großen Temperaturbereich leichtgängige und dämpfungsarme Steckverbindung wird dadurch ermöglicht, daß die Metallhülse (4) mindestens einen Schlitz (5,6,7) aufweist.

Fig.1

**Steckerstift für einen Lichtwellenleiter**

Die Erfindung bezieht sich auf einen Steckerstift für einen Lichtwellenleiter, mit einer den LWL zentral aufnehmenden Kernhülse und einer die Kernhülse umgebenden und mit ihr verklebten Metallhülse.

Eine derartige Anordnung ist durch Electronics Letters 1974, Vol. 10, Seiten 280 bis 281 bekannt.

Gemäß einer in PKI-Tech.Mitt.1987, So.1, Seite 86 beschriebenen Anordnung dieser Art werden als Glaskapillaren ausgebildete Kernröhrchen relativ dünn ausgeführt, während aus einem Weichmetall bestehende und gut bearbeitbare Metallhülsen sehr dick sind. Falls die Steckerstifte in zugeordnete beispielsweise aus Hartmetall bestehende Steckerhülsen eingesteckt werden sollen und eine Leichtgängigkeit auch in einem großen Temperaturbereich erforderlich ist, müssen relativ große Spalte zwischen Steckerstift und Steckerhülse vorgesehen sein, damit bei vorkommenden höchsten Temperaturen keine Klemmung des sich stärker ausdehnenden Steckerstifts in der Steckerhülse auftritt. Dann ergeben sich aber bei niedrigen Temperaturen zu große Spalte, welche eine Fehlausrichtung des LWL des Steckerstifts zum LWL der Steckerhülse zur Folge haben.

Der Erfindung liegt die Aufgabe zugrunde, den Steckerstift der eingangs genannten Art derart zu gestalten, daß er in einem großen Temperaturbereich eine dämpfungsarme Steckverbindung ermöglicht.

Die Lösung gelingt dadurch, daß die Metallhülse mindestens einen Schlitz aufweist.

Der Außendurchmesser des erfindungsgemäßen Steckerstifts läßt sich insbesondere bei Verwendung eines weichen Werkstoffes für die Metallhülse ohne Schwierigkeiten mit hinreichend genauer Zentrizität zur optischen Achse des LWL bearbeiten. Dabei ergeben sich im Vergleich zu ungeschlitzten Metallhülsen keine Unterschiede hinsichtlich erzielbarer Genauigkeit und Oberflächengüte. Auch bei der erfindungsgemäßen Lösung ist der Außenumfang des Steckerstifts fest und dauerhaft zur optischen Achse zentriert.

Andererseits ermöglichen die Schlitze ein Ausweichen von Teilen der Metallhülse zum Kernröhrchen, so daß auch bei hohen Temperaturbereichen keine Verklemmung des Steckerstifts in einer ihn aufnehmenden Kupplungshülse zu befürchten ist.

Gegenüber einer denkbaren Lösung mit geschlitzter Kupplungshülse und ungeschlitztem Steckerstift ergibt sich der Vorteil, daß die zentrische Lage des LWL nicht durch von außen auf die Steckerhülse einwirkende Kräfte beeinträchtigt werden kann. Bei der erfindungsgemäßen Lösung kann die Kupplungshülse ungeschlitzt und deswegen formstabil sein.

Gemäß einer ersten vorteilhaften Ausführungsform ist vorgesehen, daß die Schlitze als durchgehende Trennschlitze ausgebildet sind. Dann kann sich der aufgetrennte Ringquerschnitt der Metallhülse über die nachgiebige Kleberschicht zur Kernhülse verlagern, wobei die Schlitze als Dehnfugen wirken. Der Kleber sollte im ausgehärteten Zustand elastisch sein, damit er auch nach zahlreichen Temperaturspielen seine Haftwirkung behält.

Eine alternative Ausführungsform ist dadurch gekennzeichnet, daß die Schlitze als tiefe und annähernd tangential zur Kernhülse eingebrachte Nuten ausgebildet sind. Dabei wird die Nachgiebigkeit der Außenkontur der Metallhülse unabhängig von der Dicke oder Elastizität des Klebers allein durch Zurückfederung von Außenzonen der Metallhülse erreicht.

Es ist ausreichend, die Schlitze auf einem Teilbereich der Länge der Metallhülse im Endbereich des Steckerstiftes vorzusehen. Diese Maßnahme ist insbesondere bei einer Ausführung mit mehreren durchgehenden Trennschlitzen besonders vorteilhaft, weil die dabei entstehenden Ringsegmente an einer Seite durch den ungeschlitzten Bereich der Metallhülse gehalten werden. Dann braucht nicht nur der Kleber für den Halt der Ringsegmente an der Kernhülse zu sorgen.

Die Erfindung wird anhand von in der Zeichnung dargestellten vorteilhaften Ausführungsbeispielen erläutert.

Fig. 1 zeigt perspektivisch eine erste Ausführungsform der Erfindung.

Fig. 2 zeigt einen Querschnitt durch einen alternativ gestalteten erfindungsgemäßen Steckerstift.

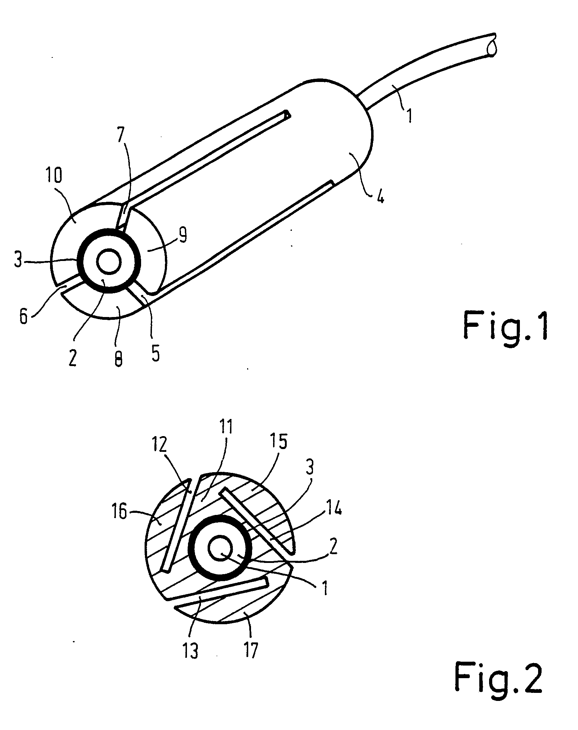

In Fig. 1 ist ein LWL 1 in die zentrale Bohrung einer aus Glas bestehenden Kernhülse 2 eingeklebt. Über eine Kleberschicht 3 ist eine Metallhülse 4 um die Kernhülse 2 angeordnet. Sie besteht aus einem gut bearbeitbaren Metall, beispielsweise aus einer unter dem Handelsnamen Arcap bekannten und im wesentlichen Nickel, Kupfer und Zink enthaltenden Legierung. Der thermische Ausdehnungskoeffizient $\alpha = 16 \cdot 10^{-6}$ dieser Metallhülse ist beispielsweise erheblich größer als der Wert $\alpha = 5,3 \cdot 10^{-6}$ einer den Steckerstift nach Fig. 1 aufnehmenden, aus Hartmetall bestehenden Kupplungshülse (nicht gezeichnet).

Damit auch bei hohen Umgebungstemperaturen von bis zu 80° C ein klemmfreies Herausziehen des Steckerstifts aus einer Kupplungshülse möglich ist, sind in die Metallhülse 4 drei Schlitze 5,6 und 7 eingebracht, welche den vorderen Bereich der Metallhülse 4 in drei Ringsegmente 8,9 und 10 aufteilen. Die Schlitze wirken als Dehnfugen und ermöglichen wegen der nachgiebigen Kleberschicht 3 ein Ausweichen der Ringsegmente 8,9 und 10 zur Kernhülse 2 hin.

Es wäre möglich, die Schlitze 5,6 und 7 axial durchgehend verlaufen zu lassen, so daß dann die Metallhülse 4 aus drei getrennten Segmenten 8,9 und 10 bestehen würde. Verfügbare dauerelastische Kleber gewährleisten bereits ein dauerhaft sicheres Anhaften der Segmente 8,9 und 10. Vorzuziehen ist jedoch die in Fig. 1 erkennbare Gestaltung bei welcher die Segmente 8,9 und 10 vom ringförmig geschlossenen Endbereich der Metallhülse 4 zusätzlich gehalten werden.

Die Außenfläche der Metallhülse 4 des in eine optische Drehbank eingespannten Steckerstifts nach Fig. 1 wird spanabhebend bearbeitet, so daß sich der gewünschte Außendurchmesser und die Zentrizität zum LWL 1 mit großer Genauigkeit herstellen lassen.

Vergleichsversuche mit einem ungeschlitzten Steckerstift haben gezeigt, daß sich hinsichtlich der Bearbeitbarkeit der Außenfläche keine merkbaren Unterschiede ergeben, jedoch betragen die Kräfte, welche bei hohen Temperaturen erforderlich waren, um den Steckerstift aus seiner Kupplungshülse zu ziehen, bei der erfindungsgemäßen Ausführung nur ein Bruchteil des bei ungeschlitzten Ausführungen gemessenen Wertes.

Eine gleich gute Wirkung wurde mit einer alternativen Ausführung nach Fig. 2 erzielt. Dort sind in eine Metallhülse 4 drei im wesentlichen tangential zur Kernhülse 2 gerichtete nutartige Schlitze 12,13 und 14 eingebracht. Bei zu starker thermischer Ausdehnung des Materials der Metallhülse 11 federn die Kuppen 15,16 und 17 zur Kernhülse 2 hin. Dadurch wird eine Klemmung des Steckerstifts in einer Kupplungshülse verhindert.

Die Ausführung nach Fig. 2 hat gegenüber Fig. 1 den Vorteil, daß die Kleberschicht 3 nicht beansprucht wird, so daß beliebige und auch unelastische Kleber verwendbar sind. Allerdings ist ein erhöhter Aufwand für die Herstellung der tangentiellen Schlitze 15,16 und 17 erforderlich.

## Ansprüche

1. Steckerstift für einen Lichtwellenleiter, mit einer den LWL zentral aufnehmenden Kernhülse und einer die Kernhülse umgebenden und mit ihr verklebten Metallhülse,
dadurch gekennzeichnet, daß die Metallhülse (4) mindestens einen Schlitz (5,6,7 bzw. 12,13,14) aufweist.

2. Steckerstift nach Anspruch 1,
dadurch gekennzeichnet, daß die Schlitze als durchgehende Trennschlitze (5,6,7) ausgebildet sind.

3. Steckerstift nach Anspruch 1 oder 2,
dadurch gekennzeichnet, daß der Kleber in Form einer elastisch nachgiebigen Schicht (3) aufgebracht ist.

4. Anordnung nach Anspruch 1,
dadurch gekennzeichnet, daß die Schlitze als tiefe und annähernd tangential zur Kernhülse eingebrachte Nuten (12,13,14) ausgebildet sind.

5. Steckerstift nach einem der Ansprüche 1 bis 4,
dadurch gekennzeichnet, daß drei symmetrisch verteilte Schlitze (5,6,7 bzw. 12,13,14) vorgesehen sind.

6. Steckerstift nach einem der Ansprüche 1 bis 5,
dadurch gekennzeichnet, daß die Schlitze (5,6,7 bzw. 12,13,14) auf einem Teilbereich der Länge der Metallhülse (4) im Endbereich der Steckerstifte vorgesehen sind.

Fig.1

Fig.2

PHD 87-203